# EUROPÄISCHE PATENTSCHRIFT

(11) **EP 2 407 022 B1**
(45) Veröffentlichungstag und Bekanntmachung des Hinweises auf die Patenterteilung: **06.03.2013**
(21) Anmeldenummer: 11172050.4
(22) Anmeldetag: 30.06.2011
(51) Int. Cl.: A01D 43/08

(54) **Maschine zur Ernte stängelartiger Pflanzen mit einer elektromotorisch angetriebenen Schneideinrichtung**
Machine for harvesting stalk-like plants with a cutting device powered by an electric motor
Machine destinée à la récolte de plantes de type à tiges avec dispositif de découpe à moteur électrique

(30) Priorität: 15.07.2010 DE 102010031363
(43) Veröffentlichungstag der Anmeldung: 18.01.2012
(73) Patentinhaber: Maschinenfabrik Kemper GmbH & Co. KG, 48973 Stadtlohn (DE)
(72) Erfinder: Wübbels, Richard, 46325 Borken (DE)
(74) Vertreter: Holst, Sönke

(56) Entgegenhaltungen:
- EP-A1- 1 609 351
- EP-A1- 1 862 057
- EP-A2- 2 047 738
- GB-A- 1 593 698

## Beschreibung

Die Erfindung betrifft eine Maschine zur Ernte stängelartiger Pflanzen mit mehreren Mäh- und Einzugseinrichtungen, die jeweils eine in eine Rotationsbewegung versetzbare Schneideinrichtung zum Abschneiden von Pflanzenstängeln und eine über der Schneideinrichtung angeordnete Fördereinrichtung zur Annahme und Abförderung der abgeschnittenen Pflanzenstängel umfassen, wobei die Fördereinrichtungen über einen mechanischen Antriebsstrang von einer Erntemaschine her antreibbar sind.

### Stand der Technik

In der DE 195 31 918 A1 wird eine für die Ernte von stängelartigen Pflanzen, wie Mais, geeignete Maschine zur Anbringung an einem Feldhäcksler beschrieben, die mehrere quer zur Vorwärtsrichtung, in der die Maschine beim Erntebetrieb über ein Feld bewegt wird, angeordnete Mäh- und Einzugseinrichtungen aufweist. Die Mäh- und Einzugseinrichtungen umfassen eine untere Schneidscheibe in der Art eines Kreissägemessers und darüber angeordnete Förderscheiben mit Aussparungen zur Annahme von Pflanzen. Die mittels der Schneidscheiben von den im Boden verbleibenden Stoppeln getrennten Pflanzen werden durch die Förderscheiben angenommen und durch die Förderscheiben und in den Zwickelbereichen zwischen den Förderscheiben angeordnete Querfördertrommeln an den Rückseiten der Mäh- und Einzugseinrichtungen zur Mitte der Maschine transportiert und an einen Einzugskanal eines Feldhäckslers übergeben. Die Schneidscheiben und die Förderscheiben werden vom Feldhäcksler her über einen mit einem Getriebe ausgestatteten mechanischen Antriebsstrang angetrieben, wobei die Schneidscheiben mit höherer Geschwindigkeit als die Förderscheiben in Drehung versetzt werden. Der Antrieb der Schneidscheiben erfolgt demnach auf rein mechanische Weise und erfordert ein relativ großes, aufwändiges und teures Getriebe zur Bereitstellung der erforderlichen Drehzahlen.

Es wurden weiterhin elektromotorische Antriebe für landwirtschaftliche Erntemaschinen vorgeschlagen. Die DE 100 34 784 A1 beschreibt eine Erntemaschine, bei der ein Elektromotor innerhalb einer zum (Ab-) Schneiden, Dreschen, Häckseln etc. dienenden Gutförder- und/oder Bearbeitungseinrichtung angeordnet ist. Elektromotorische Antriebe zum Antrieb von Pflückwalzen eines Maispflückers wurden in der DE 100 26 495 A1 und DE 10 2007 049 250 A1 beschrieben und die GB 1 593 698 A beschreibt einen Traktor mit Mähgeräten, deren Mähmesser durch jeweils einen Elektromotor angetrieben werden. Schließlich beschreibt die DE 10 2004 029 953 A1 einen Feldhäcksler, bei dem die Mäh- und Einzugsvorrichtungen des Erntevorsatzes über ein Überlagerungsgetriebe mit variabler Geschwindigkeit antreibbar sind. Das Überlagerungsgetriebe ist als Planetengetriebe ausgeführt, das einerseits mechanisch und andererseits hydraulisch oder elektrisch mit verstellbarer Drehzahl angetrieben wird.

Die EP 1 862 057 A1 beschreibt ein Vorsatzgerät für landwirtschaftliche Erntemaschinen, das nebeneinander angeordnete Mäh- und Förderelemente umfasst. Die Drehrichtung wenigstens eines Mäh- und Förderelements ist unabhängig von den übrigen Mäh- und Förderelementen veränderbar, wozu jedes der Mäh- und Förderelemente in einer ersten Ausführungsform mit einem Schaltgetriebe ausgestattet ist, das die Drehrichtungsumkehr ermöglicht und in einer anderen Ausführungsform mit einem reversiblen Hydraulikmotor angetrieben werden.

### Aufgabe der Erfindung

Die der Erfindung zu Grunde liegende Aufgabe wird darin gesehen, eine Maschine zur Ernte stängelartiger Pflanzen mit einer Schneideinrichtung und einer darüber angeordneten Fördereinrichtung zur Annahme und Abförderung von Pflanzenstängeln bereitzustellen, die einen kompakten und wenig aufwändigen Antrieb der Schneideinrichtung aufweist.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Eine in einer Vorwärtsrichtung über ein Feld bewegbare Maschine zur Ernte stängelartiger Pflanzen ist mit mehreren Mäh- und Einzugseinrichtungen ausgestattet. Die Mäh- und Einzugseinrichtungen umfassen jeweils eine in eine Rotationsbewegung versetzbare Schneideinrichtung zum Abschneiden von Pflanzen von den im Erdboden verbleibenden Stümpfen und eine über der Schneideinrichtung angeordnete Fördereinrichtung zur Annahme und Abförderung der abgeschnittenen Pflanzenstängel. Die Fördereinrichtungen sind über einen mechanischen Antriebsstrang von einer Erntemaschine her antreibbar. Die Schneideinrichtung ist antriebsmäßig mit einem ihr zugeordneten Elektromotor verbunden und ist durch diesen antreibbar. Der Elektromotor wird im Emtebetrieb von einem sich an Bord einer die Maschine tragenden Erntemaschine befindlichen Generator angetrieben. Es kann sich um einen Gleich- oder Wechselstrom- (insbesondere Drehstrom-) Motor handeln.

Der Elektromotor stellt somit die Energie zum Antrieb der Schneideinrichtung bereit und kann problemlos die erforderlichen Drehzahlen erzeugen, sodass in einer vorteilhaften Ausführungsform auf ein Getriebe zwischen der Ausgangswelle des Elektromotors und der Schneideinrichtung verzichtet werden kann. Auf diese Weise erübrigt sich ein aufwändiges mechanisches Getriebe zum mechanischen Antrieb der Schneideinrichtung.

Der Elektromotor umfasst einen an einem Rahmen der Maschine abgestützten Stator und einen mit der Schneideinrichtung antriebsmäßig verbundenen Rotor. Vorzugsweise ist der Rotor innerhalb des Stators angeordnet, obwohl auch die umgekehrte Anordnung denkbar ist.

Die Fördereinrichtung umfasst vorzugsweise mehrere übereinander angeordnete Förderscheiben mit um ihren Umfang verteilten Ausbuchtungen, die mittels eines Antriebs um eine koaxial zur Achse der Schneideinrichtung verlaufende Achse in Drehung versetzbar sind. Die Fördereinrichtung wird bei einer bevorzugten Ausführungsform der Erfindung über einen mechanischen Antriebsstrang angetrieben, der eine sich koaxial zum Rotor und Stator durch den Innenraum des Elektromotors erstreckende Welle umfasst. Die Anordnung zum Antrieb der beweglichen Elemente der Mäh- und Einzugseinrichtung ist demnach sehr kompakt ausgeführt.

### Ausführungsbeispiel

In den Zeichnungen ist ein nachfolgend näher beschriebenes Ausführungsbeispiel der Erfindung dargestellt. Es zeigt:
- Fig. 1: eine seitliche Ansicht einer Erntemaschine mit einer daran angebrachten Maschine zur Ernte stängelartiger Pflanzen,
- Fig. 2: eine Draufsicht auf die Maschine, und
- Fig. 3: einen Schnitt durch die Maschine entlang der Linie 3-3.

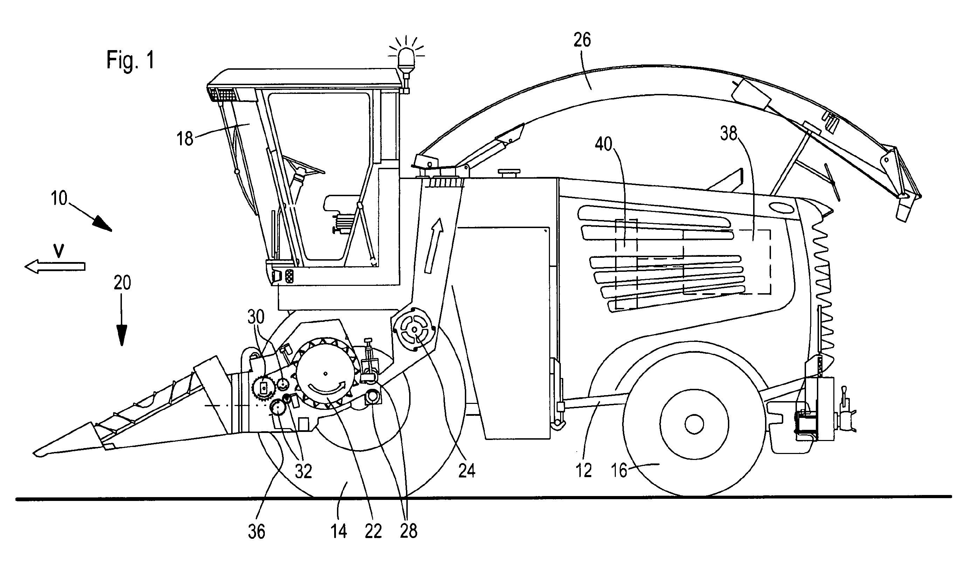

Eine in der Figur 1 gezeigte Erntemaschine 10 in der Art eines selbst fahrenden Feldhäckslers baut sich auf einem Rahmen 12 auf, der von angetriebenen vorderen Rädern 14 und lenkbaren rückwärtigen Rädern 16 getragen wird. Die Bedienung der Erntemaschine 10 erfolgt von einer Fahrerkabine 18 aus, von der aus ein Erntevorsatz in Form einer Maschine 20 zur Ernte stängelartiger Pflanzen einsehbar ist. Mittels der Maschine 20 vom Boden aufgenommenes Gut, z. B. Mais, Getreide oder dergleichen, wird durch obere Vorpresswalzen 30 und untere Vorpresswalzen 32 vorverdichtet und einer Häckseltrommel 22 zugeführt, die es in kleine Stücke häckselt und es einer Fördervorrichtung 24 aufgibt. Das Gut verlässt die Erntemaschine 10 zu einem nebenher fahrenden Anhänger über eine in ihrer Position verstellbare Austrageinrichtung 26. Zwischen der Häckseltrommel 22 und der Fördervorrichtung 24 erstreckt sich eine Nachzerkleinerungsvorrichtung 28, durch die das zu fördernde Gut der Fördervorrichtung 24 tangential zugeführt wird. Im Folgenden beziehen sich Richtungsangaben - wenn nicht anders erwähnt -, wie vorn, hinten, links und rechts auf die Vorwärtsrichtung V der Erntemaschine 10, die in der Figur 1 von rechts nach links verläuft. Die Maschine 20 ist am Einzugskanal 36 der Erntemaschine 10, in dem sich die oberen Vorpresswalzen 30 und unteren Vorpresswalzen 32 befinden, lösbar befestigt.

Der Antrieb der Häckseltrommel 22, der Nachzerkleinerungseinrichtung 28 und der Fördervorrichtung 24 erfolgt mittels eines Verbrennungsmotors 38 durch einen mechanischen Antriebsstrang. Der Verbrennungsmotor 38 treibt auch andere antreibbare Elemente der Erntemaschine 10 an, wie ein Hydraulikpumpenaggregat, das wiederum einen Hydromotor zum Antrieb der Räder 14 und bei Allradantrieb 16 sowie einen Hydromotor zum Antrieb der Vorpresswalzen mit unter Druck stehendem Hydraulikfluid versorgt. Außerdem treibt der Verbrennungsmotor 38 einen elektrischen Generator 40 an.

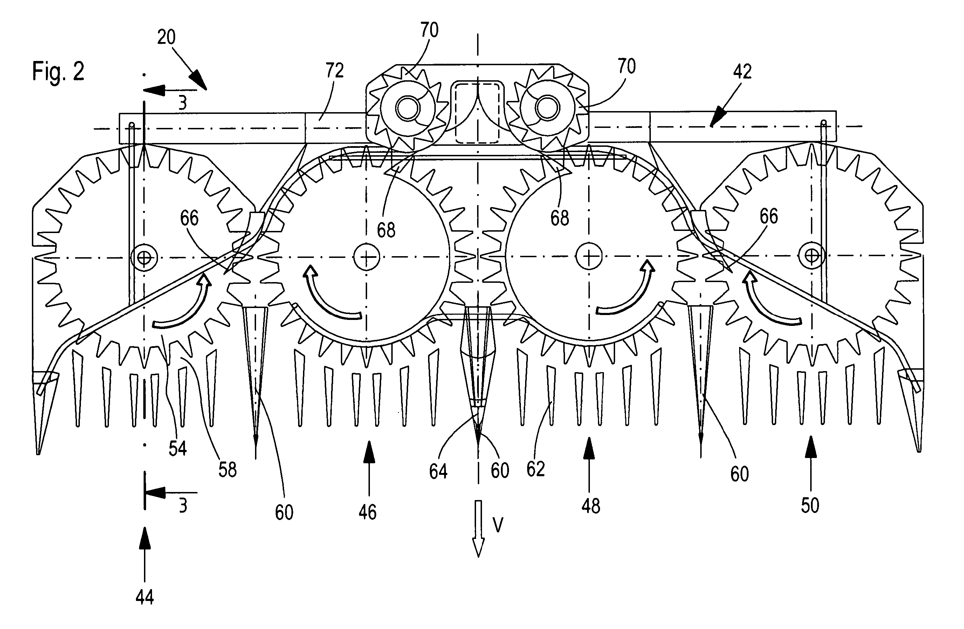

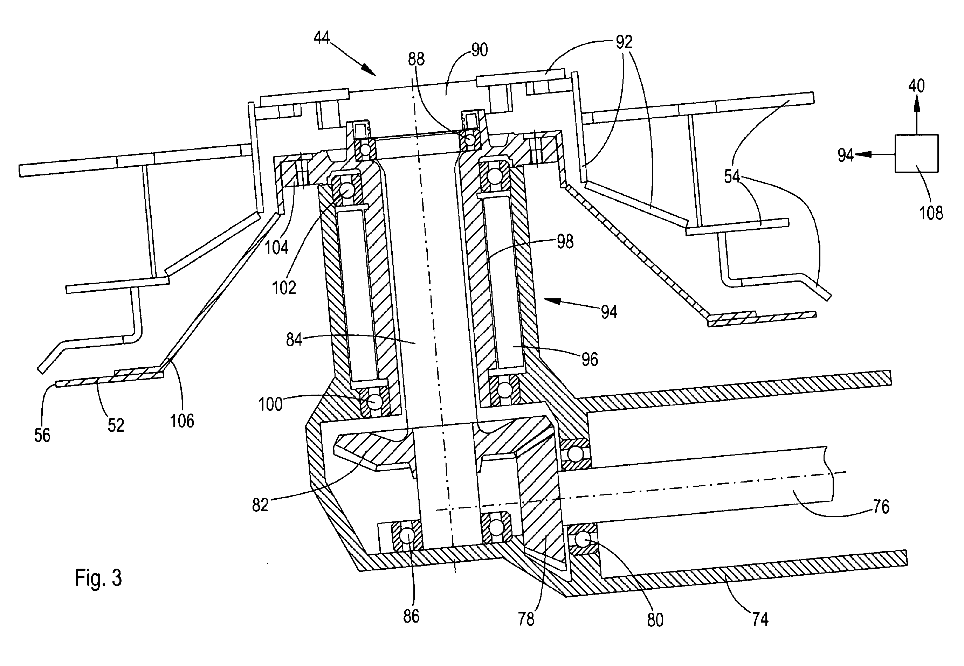

Die Maschine 20 ist in der Figur 2 in einer Draufsicht dargestellt. Sie umfasst einen Tragrahmen 42, an dem seitlich nebeneinander vier Mäh- und Einzugseinrichtungen 44, 46, 48, 50 befestigt. Die Mäh- und Einzugseinrichtungen 44 bis 50 setzen sich jeweils aus einer unteren, in Drehung versetzbaren Schneideinrichtung (vgl. Figur 3) in Form einer Schneidscheibe 52 und mehreren koaxial darüber angeordneten, in Drehung versetzbaren, als Fördereinrichtung dienenden Förderscheiben 54 zusammen. Die Schneidscheiben 52 sind am Rand mit einer Schneidkante 56 versehen, die mit scharfen Zähnen ausgestattet oder anderweitig geschärft ist, um die Pflanzenstängel von dem im Boden verbleibenden Stoppeln abzutrennen. Die Stängel finden in Ausbuchtungen 58 der Förderscheiben 54 Aufnahme und werden wie unten beschrieben zur Erntemaschine 10 transportiert, der die Maschine 20 in der Vorwärtsrichtung V über ein Feld bewegt.

Zwischen den Mäh- und Einzugseinrichtungen 44 bis 50 befinden sich jeweils Stängelteiler 60, um die Pflanzen seitlich abzulenken und in den Eingriffsbereich der Mäh- und Einzugseinrichtungen 44 bis 50 zu verbringen, wenn erforderlich. An den Vorderseiten der Mäh-und Einzugseinrichtungen 44 bis 50 sind kleinere Stängelteiler 62 angeordnet. Die Arbeitsbreite der Mäh- und Einzugseinrichtungen 44 bis 50 entspricht jeweils zwei Reihen, d. h. etwa 1,5 m. Die Maschine 20 kann somit acht im Abstand von 75 cm gesäte Reihen Mais gleichzeitig ernten. Durch andere Dimensionierung und/oder Anzahlen der Mäh- und Einzugseinrichtungen 44 bis 50 kann auch eine beliebige andere Arbeitsbreite erzielt werden.

Beim Erntebetrieb drehen sich die Mäh- und Einzugseinrichtungen 44 bis 50 in den durch die Pfeile angedeuteten Richtungen. Die der Längsmittelebene 64 benachbarten, inneren Mäh- und Einzugseinrichtungen 46, 48 fördern die Pflanzen somit zunächst nach außen und nach hinten, während die äußeren Mäh- und Einzugseinrichtungen 44, 50 sich zu den ihnen jeweils benachbarten Mäh- und Einzugsrichtungen 46, 48 gegensinnig drehen. Wie anhand der Figur 1 erkennbar ist, übergeben die äußeren Mäh- und Einzugseinrichtungen 44, 50 ihr Erntegut etwa in der Mitte zwischen den Drehachsen der Mäh- und Einzugseinrichtungen 44, 46 bzw. 48, 50 an die inneren Mäh- und Einzugseinrichtungen 46, 48, wozu Ausräumer 66 vorgesehen sind. An der Rückseite der inneren Mäh- und Einzugseinrichtungen 46, 48 wird das Erntegut durch weitere Ausräumer 68 aus den Ausbuchtungen 58 herausgehoben und an Fördertrommeln 70 übergeben, die um leicht nach vorn geneigte Achsen rotieren und den Höhenunterschied zwischen dem Boden der Maschine 10 und den nachfolgenden Einzugswalzen des Einzugskanals des Feldhäckslers überwinden.

Die Figur 3 zeigt einen Schnitt durch die Maschine 20 entlang der Linie 3-3 der Figur 1. Ein hohler Querträger 72 des Tragrahmens 42 trägt Getriebegehäuse 74, an denen jeweils eine Mäh- und Einzugseinrichtung 44 (oder 46, 48 oder 50) abgestützt ist, und von denen sich Befestigungsrohre für die Teilerspitzen 62 nach vorn erstrecken. Im Getriebegehäuse 74 befindet sich der mechanische Antriebsstrang zum Antrieb der Förderscheiben 54, der eine erste Welle 76 umfasst, die sich vom Querträger 72 nach vorn bis zu einem ersten Kegelzahnrad 78 erstreckt und rückwärtig des Kegelzahnrads 78 in einer Lagerung 80 abgestützt ist. Mit dem ersten Kegelzahnrad 78 kämmt ein zweites Kegelzahnrad 82, das mit dem unteren Ende einer zweiten Welle 84 gekoppelt ist, die in einer unteren Lagerung 86 und einer oberen Lagerung 88 abgestützt ist. Die zweite Welle 84 erstreckt sich schräg nach vorn und oben und ist an ihrem oberen Ende mit einem Halter 90 verbunden, der Flansche 92 trägt, an denen die Förderscheiben 54 befestigt sind. Die Förderscheiben 54 werden demnach von der ersten Welle 76 angetrieben, die ihrerseits über eine Querwelle (nicht gezeigt) innerhalb des Querträgers 72 und eine Gelenkwelle (nicht gezeigt) von der Erntemaschine 10 her angetrieben wird, sei es über einen weiteren, rein mechanischen Antriebsstrang vom Verbrennungsmotor 38 oder über einen zugeordneten Hydromotor (nicht gezeigt). In beiden Fällen kann die Drehzahl der Förderscheiben 54 konstant oder verstellbar sein.

Der Antrieb der Schneidscheibe 52 erfolgt über einen ihr zugeordneten Elektromotor 94, der innerhalb eines sich vertikal erstreckenden Abschnitts des Getriebegehäuses 74 angeordnet ist und einen Stator 96 sowie einen Rotor 98 umfasst. Der Rotor 98 ist im Innenraum des Stators 96 angeordnet und umschließt die zweite Welle 84 konzentrisch. Der Rotor 98 ist durch untere und obere Lagerungen 100, 102 drehbar am sich vertikal erstreckenden Abschnitt des Getriebegehäuses 74 abgestützt. Der Rotor 98 ist an seinem oberen Ende über einen oberen, sich radial erstreckenden Flansch 104 und einen Haltering 106 mit der eigentlichen Schneidscheibe 52 verbunden, d. h. ohne dazwischen geschaltete Getriebe oder dergleichen. Der Rotor 98 und die zweite Welle 84 sind unabhängig voneinander drehbar.

Im Betrieb versorgt der Generator 40 den Elektromotor 94 mit elektrischer Energie. Der Elektromotor 94 kann beliebiger Ausführungsart (Gleich- oder Wechsel- oder Drehstrommotor, z. B. in Synchron- oder Asynchronausführung) sein und versetzt die Schneidscheibe 52 gleich- oder gegensinnig zu den Förderscheiben 54 in eine vorzugsweise schnellere Drehung als die Förderscheiben 54. Neben dem kompakten Aufbau der Anordnung zum Antrieb der Schneidscheibe 52 bietet der Elektromotor 94 noch die Vorteile, dass ein schnelles Anhalten der Schneidscheibe 52 möglich ist, indem nach dem Abschalten des Antriebs der Schneidscheibe 52 die Bremswirkung des Elektromotors 94 durch eine geeignete Ansteuerschaltung 108 des Elektromotors 94 (z. B. Ableiten der EMK über einen Widerstand) auf elektrische Weise vergrößert wird. Die bisher verwendeten Freiläufe und Bremsen für die Schneidscheibe 52 werden demnach nicht mehr benötigt, was den Aufwand und Raumbedarf der Anordnung für den Antrieb der Schneidscheibe 52 gering hält.

## Patentansprüche

1. Maschine (20) zur Ernte stängelartiger Pflanzen mit mehreren Mäh- und Einzugseinrichtungen (44, 46, 48, 50), die jeweils eine in eine Rotationsbewegung versetzbare Schneideinrichtung zum Abschneiden von Pflanzenstängeln und eine über der Schneideinrichtung angeordnete Fördereinrichtung zur Annahme und Abförderung der abgeschnittenen Pflanzenstängel umfassen, wobei die Fördereinrichtungen über einen mechanischen Antriebsstrang von einer Erntemaschine her antreibbar sind, **dadurch gekennzeichnet, dass** die Schneideinrichtungen antriebsmäßig jeweils mit einem der jeweiligen Schneideinrichtung zugeordneten Elektromotor (94) verbunden sind.

2. Maschine (20) nach Anspruch 1, **dadurch gekennzeichnet, dass** die Schneideinrichtung ohne Zwischenschaltung eines Getriebes antriebsmäßig mit dem Elektromotor (94) verbunden ist.

3. Maschine (20) nach Anspruch 2, **dadurch gekennzeichnet, dass** der Elektromotor (94) einen an einem Rahmen (42) der Maschine (20) abgestützten Stator (96) und einen mit der Schneideinrichtung verbundenen Rotor (98) umfasst, und dass der Rotor (98) innerhalb des Stators (96) angeordnet ist.

4. Maschine (20) nach einem der Ansprüche 1 bis 3, **dadurch gekennzeichnet, dass** die Fördereinrichtung mehrere übereinander angeordnete Förderscheiben (54) mit um ihren Umfang verteilten Ausbuchtungen (58) umfasst, die mittels eines Antriebs um eine koaxial zur Achse der Schneideinrichtung verlaufende Achse in Drehung versetzbar sind.

5. Maschine (20) nach einem der Ansprüche 1 bis 4, **dadurch gekennzeichnet, dass** der mechanische Antriebsstrang der Fördereinrichtung eine sich koaxial zum Rotor (98) und Stator (96) durch den Innenraum des Elektromotors (94) erstreckende Welle (84) umfasst.

6. Maschine (20) nach einem der Ansprüche 1 bis 5, **dadurch gekennzeichnet, dass** der Elektromotor (94) elektrisch mit einer Ansteuerschaltung (108) verbunden ist, die betreibbar ist, die Bremswirkung des Elektromotors (94) nach einem Abschalten zu vergrößern.

## Claims

1. Machine (20) for harvesting stalk-like plants with a plurality of mowing and gathering devices (44, 46, 48, 50) which each comprise a cutting device, which can be set into a rotational movement, for cutting off plant stalks, and a conveyor device which is arranged above the cutting device and is intended for receiving and conveying away the cutoff plant stalks, wherein the conveying devices are driveable by a harvesting machine via a mechanical drive train, **characterized in that** the cutting devices are each connected in terms of drive to an electric motor (94) assigned to the particular cutting device.

2. Machine (20) according to Claim 1, **characterized in that** the cutting device is connected in terms of drive to the electric motor (94) without the interconnection of a gearing.

3. Machine (20) according to Claim 2, **characterized in that** the electric motor (94) comprises a stator (96) supported on a frame (42) of the machine (20) and a rotor (98) which is connected to the cutting device, and **in that** the rotor (98) is arranged within the stator (96).

4. Machine (20) according to one of Claims 1 to 3, **characterized in that** the conveying device comprises a plurality of conveying discs (54) which are arranged one above another and have recesses (58) distributed about the circumference thereof, said conveyor discs being settable into rotation about an axis running coaxially with respect to the axis of the cutting device by means of a drive.

5. Machine (20) according to one of Claims 1 to 4, **characterized in that** the mechanical drive train of the conveying device comprises a shaft (84) extending coaxially with respect to the rotor (98) and the stator (96) through the interior of the electric motor (94).

6. Machine (20) according to one of Claims 1 to 5, **characterized in that** the electric motor (94) is electrically connected to an activation circuit (108) which can be operated in order to increase the braking action of the electric motor (94) following switching off.

## Revendications

1. Machine (20) pour la récolte de plantes à tiges comprenant plusieurs dispositifs de fauche et d'amenée (44, 46, 48, 50) qui comprennent chacun un dispositif de coupe pouvant être animé d'un mouvement de rotation pour séparer des tiges de plantes et un dispositif de transport disposé au-dessus du dispositif de coupe pour prendre et évacuer les tiges de plantes coupées, les dispositifs de transport pouvant être entraînés par le biais d'une chaîne cinématique mécanique depuis une machine de récolte, **caractérisée en ce que** les dispositifs de coupe sont connectés par entraînement à chaque fois à un moteur électrique (94) associé au dispositif de coupe respectif.

2. Machine (20) selon la revendication 1, **caractérisée en ce que** le dispositif de coupe est connecté par entraînement au moteur électrique (94) sans l'interposition d'une transmission.

3. Machine (20) selon la revendication 2, **caractérisée en ce que** le moteur électrique (94) comprend un stator (96) supporté sur un châssis (42) de la machine (20) et un rotor (98) connecté au dispositif de coupe, et **en ce que** le rotor (98) est disposé à l'intérieur du stator (96).

4. Machine (20) selon l'une quelconque des revendications 1 à 3, **caractérisée en ce que** le dispositif de transport comprend plusieurs disques de transport (54) disposés les uns au-dessus des autres avec des renflements (58) répartis sur leur périphérie, lesquels peuvent être mis en rotation autour d'un axe s'étendant coaxialement à l'axe du dispositif de coupe, au moyen d'un entraînement.

5. Machine (20) selon l'une quelconque des revendications 1 à 4, **caractérisée en ce que** la chaîne cinématique mécanique du dispositif de transport comprend un arbre (84) s'étendant coaxialement au rotor (98) et au stator (96) à travers l'espace intérieur du moteur électrique (94).

6. Machine (20) selon l'une quelconque des revendications 1 à 5, **caractérisée en ce que** le moteur électrique (94) est connecté électriquement à un circuit de commande (108), qui peut fonctionner de manière à augmenter l'effet de freinage du moteur électrique (94) après une coupure.
